# EUROPEAN PATENT SPECIFICATION

(11) **EP 3 789 284 B1**
(45) Date of publication and mention of the grant of the patent: **14.02.2024**
(21) Application number: 19382774.8
(22) Date of filing: 06.09.2019
(51) Int. Cl.: B62K 3/00, B62K 25/12

(54) **SCOOTER COMPRISING SUSPENSION MEANS**
ROLLER MIT AUFHÄNGUNGSMITTEL
SCOOTER COMPRENANT DES MOYENS DE SUSPENSION

(43) Date of publication of application: 10.03.2021
(73) Proprietor: Lampsy Personal Mobility S.L., 08005 Barcelona - CIF B67406850 (ES)
(72) Inventor: PÉREZ BAEZA, José Luis, 08017 Barcelona (ES)
(74) Representative: Balder IP Law, S.L.

(56) References cited:
- EP-A1- 3 000 704
- CN-U- 204 296 995
- GB-A- 156 970
- US-A- 5 154 436
- US-A1- 2002 109 323

## Description

### TECHNICAL FIELD

The present invention relates to a scooter, preferably an electric scooter, provided with suspension means that implies a simpler arrangement, more steering possibilities, specially more reduced steering components. The invention can also be applied to a mechanical scooter or to a tricycle having only one front wheel.

### STATE OF THE ART

Known are in the art scooters comprising a user support platform, a front wheel and a support of the front wheel. For example, DE9403582U1 discloses a collapsible scooter having a footboard and a steering column. The footboard is arranged on two tubes running parallel to each other. The steering column is connected to a support member for the front wheel of the scooter. Furthermore, the steering column is rotatably connected to the footboard by means of a steering head. In addition, the scooter comprises a rod rotatably connected to the axis of the front wheel and to the two tubes. The rotatable connections render the scooter collapsible, decreasing the amount of space required when storing the scooter. However, the suspension of the scooter can be further improved.

US5127488A discloses a power accessory that can be retrofitted to a skateboard. The power accessory comprises a drive assembly comprising a combustion engine which powers a drive wheel. The skater can control the power supplied to the drive wheel by means of a hand grip. The hand grip is connected to the drive assembly through a cable. The drive assembly is attached to the skateboard by means of a leaf spring. In particular, the drive assembly is mounted on one end of the leaf spring and the other end of the leaf spring is attached between the rear truck and the body of the skateboard. The leaf spring has a slight offset in it so that when the leaf spring is connected to the body of the skateboard, the rear wheel of the skateboard is off the ground when the skateboard is unloaded. When the skateboard is loaded, the leaf spring is deformed, making the rear wheel contact the ground. An advantage of the power accessory is that the skateboard has the same steering characteristics after installation of the power accessory. However, a simple steering mechanism easier to operate is desirable.

Known are in the art scooters comprising a user support platform, a front wheel, a support of the front wheel and suspension means. For example, US5154436A discloses a scooter having a board member on which a rider can stand. The scooter has a vertical shaft attached at one end of the board member. The vertical shaft is provided with a horizontal handle at the top thereof. The aim of the handle is to improve balance of the rider and can be used to effectuate jumps and other aerial maneuvers. In addition, the scooter comprises an arcuate leaf spring under the board member. The arcuate leaf spring is not attached to the board member but rather engages the board member when a downward force from the weight of the rider is applied. The principal function of the leaf spring is to provide a resilient deformation restoring force to the board member. In this way the scooter of US5154436A can be provided with a thinner, and hence more flexible, board member which can flex enhancing rider's control. GB151691A discloses a motor driven scooter which comprises a footboard and a front wheel carried by front wheel fork. An up and down swingable member carries the front wheel fork and, at another section, the swingable member carries an active housing. One end of a spring is fixed to the active housing while the other end of the spring is fixed to a stationary housing. In this way, swinging of the swingable member causes swinging of the active housing and hence the spring changes its curvature. In this way, the spring springs the front wheel of the motor driven scooter.

GB 156970 A, CN204296995U, EP3000704A1, US2002109323A1 and US5154436A disclose scooters comprising a user support platform, a front wheel, a front fork of the front wheel, and suspension means of the front wheel, the suspension means comprising an impact absorber linked to the platform, the impact absorber being movable or deformable only in planes parallel to a median plane of the platform such that the front fork of the front wheel is rotatable with respect to the single leaf spring to allow steering of the scooter. GB 156 970 A is considered the closest Prior Art and discloses the features of the preamble of claim 1.

However, a simple, small and compact steering mechanism easier to operate is desirable. In addition, it is desirable a scooter where it is decreased the degree to which the user feels bumps in the ground while driving the scooter. Simultaneously it is desirable to decrease the amount of space required by the suspension and, more particularly, by an impact absorber.

### DESCRIPTION OF THE INVENTION

For overcoming the state of the art limitations, the present invention proposes a scooter According to claim 1.

In the present description, an attempt has been made to use the terminology commonly used in mechanics. The median plane must be understood as a plane that divides the main body of the scooter into two equal parts, that is, it is a plane of symmetry of the scooter. It can also be defined as a plane containing the longitudinal direction of the scooter and a line perpendicular to the user's support platform. Another way of expressing it would be as a vertical plane that passes through the longitudinal direction when the scooter is in vertical arrangement. In any case, this medium plane has been represented in the figures to leave no doubt.

The definition of this plane is essential for the correct interpretation of the claimed subject matter. When reference is made in the description and in the claims that the impact absorbing is deformable or movable in said plane, it means that its degrees of freedom of movement are contained in that plane and that it can also rotate or deform in that plane, which It should be understood that the vector describing its rotation or the vectors defining its deformation is/are a vectors perpendicular to its plane. In other words, all points of the impact absorber move in planes parallel to said median plane. It does not at all mean, as the skilled person knows, that the impact absorbed is contained in the mentioned plane.

With respect to the front wheel support, this support is a fork.

The characteristics of the invention allow making dynamically independent, in a region as close as desired to the wheel axis, the damping and steering functions. In particular, the invention allows the forces caused by the impacts to be brought along the shortest path to the platform and, on the other hand, allows the structural requirements of the steering elements to be drastically reduced.

In the state-of-the-art scooters, the suspension means are integral with the steering bar. That implies that the steering bar carries with it the suspension elements, which in most cases involve a large mass that is rotatable with the steering bar itself. One of the drawbacks is that the steering means are complex and forces the driving means, i.e. the user, to deal with the inertia of the suspension and damping components. In addition, the fact that the suspension elements rotate together with the wheel imply limitations in the design of its components, which involve both the elastic recovery element k and the damping c. Another drawback that is overcome is the complexity, and hence the lack of aesthetics of the prior art solutions. The present invention, by separating the functions, open a great variety of possibilities both for the steering of the wheel and for the suspension means.

The only limitation involved in the present invention is guaranteeing that the rotation of the front wheel support has the minimum friction with the impact absorber. As claimed, the main relative moment therebetween is the steering rotation movement, which can easily be dealt with bearings, which, considering the forces involved, can have a very reduced dimension.

As will be seen, by independentizing the steering and suspension functions, different technologies can be used independently for both.

For the suspension, the impact absorber is a single leaf spring. This is a very elegant solution due to its simplicity, and also due to its good aesthetics.

The impact absorber can be provided with recesses or through openings for the passage of fixing elements and/or structural components.

According to the invention, the front end of the impact absorber is above the wheel such that the suspension means transmit the impacts to the platform through a region located just above the front wheel, the support of the front wheel bearing preferably on a lower surface of the impact absorber.

This allows to use the classical fork as front wheel support.

In some embodiments the scooter comprises steering means and a link between the support and the steering means.

As will be seen in the preferred embodiments, the steering can be implemented in a classical manner by means of a steering rod, although of variable length, for example by means of a telescopic coupling. Another way of implementing the steering is by means of an electric steering motor, arranged to drive the front wheel support, the rotation of this motor being controlled from the handlebar. Another option is to use cables, either provided with forwarding or by using the well-known Bowden cables.

In some embodiments the impact absorber extends backwards by means of a rear end, a rear wheel bearing on the rear end of the elongated element such that the impact absorber also constitutes the suspension of the rear wheel.

It is a solution that is very elegant from a mechanical and also aesthetic point of views, since a single slender element extending along the longitudinal direction of the scooter constitutes both the front and rear suspension means. This element replaces the usual mechanical elements implemented based on springs, cams, etc., which make known scooters little slender, to constitute an element whose function is not apparent.

In some embodiments the steering means comprise a steering rod that can rotate with respect to the platform, the support passes through the impact absorber, such that the link between the support and the steering rod is placed over the impact absorber.

In some embodiments the link between the support and the steering rod is mechanical and is telescopic such they are mutually linked according to a single degree of freedom.

In some embodiments the platform has an upper prolongation that extends forwards and upwards, such that it encloses an upper portion of the steering rod, the link between the support and the steering rod being preferably inside the upper prolongation.

It is an elegant solution that allows to hide mechanical articulation elements, which is beneficial for safety, for the protection of the scooter's joints and also from a purely aesthetic point of view.

This upper prolongation can also serve as a cable concealment element when this is the option for the scooter's steering system.

In some embodiments an articulation portion of the support located above the impact absorber and below the link between the support and the steering rod is articulated or is elastic such a that it allows bending the articulation portion in the plane defined by the steering rod and the longitudinal direction of the scooter.

It is an advantageous option that is largely viable thanks to the concept of independence between steering and suspension. By becoming independent, the steering bar is no longer subject to so many axial efforts, and therefore can be implemented with elements of reduced section, which in turn can be implemented with elastic parts.

In some embodiments the articulation portion comprises a cardan articulation and/or elastic portion such that is bendable.

We emphasize that this solution constitutes an invention in itself, independent of the main concept claimed. In many state-of-the-art scooters, the folding of the steering column with respect to the user platform is achieved by a locking and unlocking system that implies a weak point in the direction. On the other hand, the use of elastic or cardan parts avoids having to make couplings and decoupling of the steering bar, thus avoiding the presence of weakened areas. Likewise, it is emphasized that this prevents parts that may be, throughout the use, source of mismatches, tolerances that are extended etc.

In some embodiments the impact absorber is attached to the platform in a central area of the platform, the central area being preferably located in the second third of the platform.

As already pointed out above, a very advantageous effect of the invention is that the suspension means can be extended throughout virtually the entire scooter. That offers many possibilities for anchoring and joining, and also many possibilities for damping. For example, when anchoring or joining the impact absorber in a central area of the scooter, which could be for example an area that extends a considerable portion of the scooter, such as 20% of its total length, will achieve a very comfortable dynamics for the user, because the impact forces can be distributed much more than in the known scooters, where all the impacts are concentrated in the front area.

In some embodiments the scooter comprises a rotating bearing for transmitting the forces between the support of the front wheel and the impact absorber.

Making steering and suspension independent implies, as claimed as an essential feature of the invention, that there must be a rotation between the impact absorber and the front wheel support. The union can be made directly, providing that the materials have minimal friction with each other, through the use of lubricants etc. Another possibility, taking into account that it is a point that will transmit high impact efforts is that it has bearings.

In some embodiments the attachment between the platform and the elongated impact absorber comprises elastic parts, and is preferably formed by a transversal axis that allows the impact absorber to rotate with respect to the platform, and at least four pairs of elastic parts, preferably cylindrical or triangular, that elastically limit the rotation angle of the impact absorber with respect to the platform around said axis.

In this way, when subjected to certain impacts, the impact absorber can be rotated instead of be deformed, decreasing the stress to which the impact absorber is subjected.

In some embodiments the impact absorber(s) is (are) made of plastic, metal, fiber material, carbon fiber, composite or wood.

Therefore, the impact absorber can be made of a broad range of materials and at the same time can have a broad range of geometries, while achieving the desired impact absorption.

In some embodiments the scooter comprises a retractable handle in the rear portion or stern of the platform.

As this solution will be described, it also constitutes an invention in itself that could be implemented in many existing scooters. A known solution for having a scooter carrying handle is to provide a through opening in the platform. However, this solution is expensive, and implies weakening of the user platform, which is an important sacrifice when it comes to a purely auxiliary element. On the other hand, the retractable handle arranged in the stern of the scooter, in an area less structurally compromised, is very advantageous, since it does not affect the structure, it is easy to implement, and is hidden and symmetrical.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 is a first perspective view of a scooter according to an embodiment of the invention.
Figure 2 is a second perspective view of a scooter according to an embodiment of the invention.
Figure 3 is a lateral view of a scooter according to an embodiment of the invention.

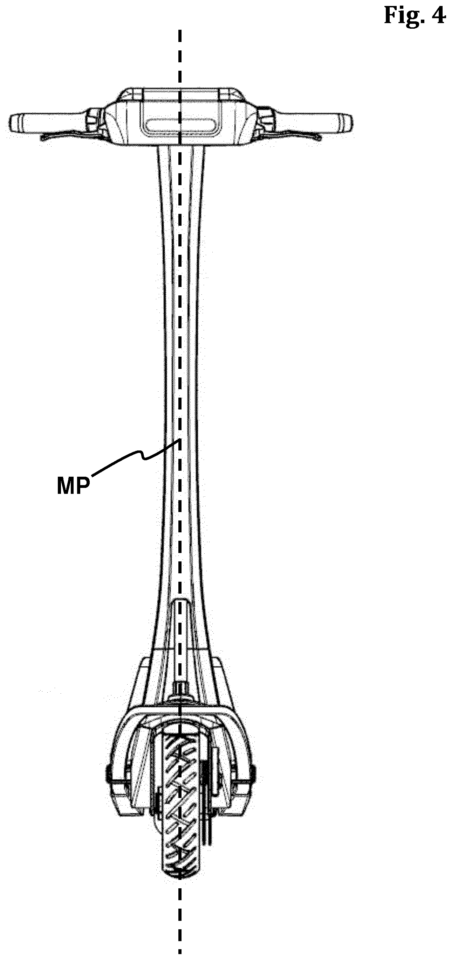

Figure 4 is a rear view of a scooter according to an embodiment of the invention.
Figures 5, 6a and 6b are schematic lateral views showing different positions of an impact absorber with respect to a user support platform of a scooter according to an embodiment of the invention.
Figures 7, 8 and 9 are schematic lateral views showing different positions of an impact absorber with respect to a user support platform of a scooter according to an embodiment of the invention showing attachments between the platform and the impact absorber.
Figure 10 shows a schematic lateral view of an impact absorber attached to a user support platform of a scooter according to an embodiment of the invention.
Figure 11 shows a rear portion of a user support platform of a scooter according to an embodiment, provided with a retractable handle, in an occult position.
Figure 12 shows a rear portion of a user support platform of a scooter according to an embodiment, provided with a retractable handle, in a use position.
Figure 13 is a schematic lateral view of the lower front portion of a scooter according to an embodiment of the invention where the steering means comprise a steering rod having a bendable portion.
Figure 14 is a top view of a scooter according to an embodiment of the invention which shows the median plane.
Figure 15 shows a section of an embodiment of the mechanical link between the front wheel support and the front end of the impact absorber.
Figure 16 is an elevation of the front portion of the scooter in an embodiment in which the steering means are electric.
Figure 17 shows a complete elevation of an embodiment in which the transmission of the steering between handlebars and wheel support is done by inextensible cables.
Figure 18 shows a detail of an embodiment in which a steering crown and two Bowden cables are used as steering means.
Figure 19 schematically shows the embodiment based on Bowden cables, especially the two ends, the wheel on the left and the handlebar on the right.

### DESCRIPTION OF A WAY OF CARRYING OUT THE INVENTION

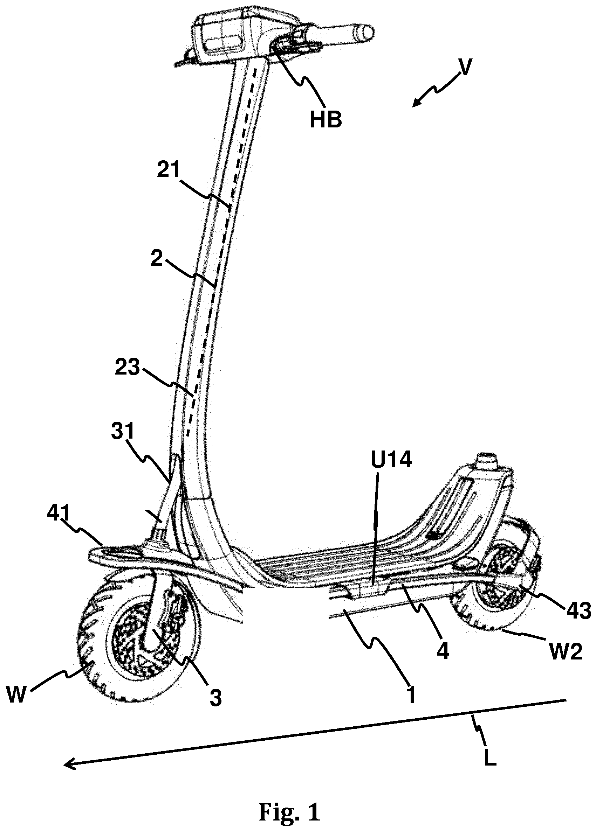

As shown in FIG. 1, according to an embodiment, the scooter V comprises a user support platform 1, a front wheel W and a support 3 of the front wheel W.

The scooter is provided with suspension means which comprise an impact absorber 4 linked to the platform 1.

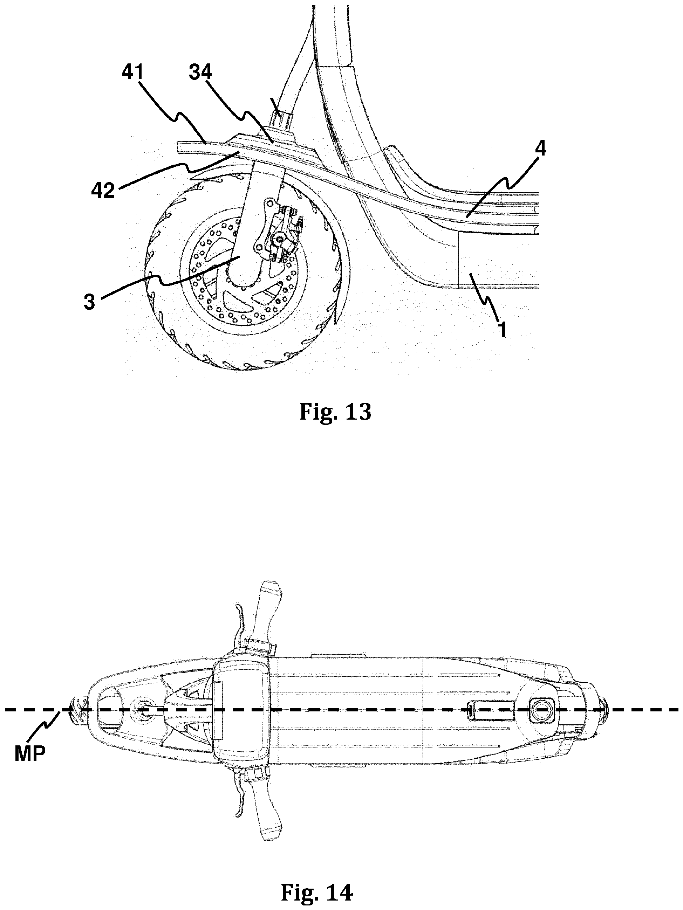

The impact absorber 4 is a key component of the present invention, which main concept is based in making it independent of the steering means by allowing it only to move in the median plane MP. That is, the impact absorber of the invention does not rotate with the front wheel. This is achieved by providing an impact absorber 4 comprising a front end 41, the impact absorber 4 being movable or deformable only in a median plane of the platform 1 such that the support 3 of the front wheel W is rotatable with respect to the impact absorber 4 to allow steering of the scooter, the support 3 of the front wheel W leaning on the front end 41 of the impact absorber 4, such that the suspension means S transmit the impacts to the platform. As shown in figure 1 or in figure 13, the front end 41 of the impact absorber 4 is above the wheel W such that the suspension means S transmit the impacts to the platform through a region located just above the front wheel W, the support 3 of the front wheel W bearing on a lower surface 42 of the impact absorber 4.

The embodiments shown are all based in a leaf spring 4. This leaf spring can consist, as mentioned, in two half-bodies that join in the bow 41, or front end.

The impact absorber is a leaf spring 4 like a unitary platform, that is to say in one piece, although provided with the necessary openings for the passage of joining elements between the lower platform elements BAT, where the battery could be housed, and the upper platform elements B1, where the user leans.

As shown in the figures, the scooter comprises steering means 2 and a link 23 between the support 3 and the steering means 2, the steering means 2 comprising preferably a steering rod 2 that can rotate with respect to the platform 1. In this case the support 3 passes through the impact absorber 4, such that the link 23 between the support 3 and the steering rod 2 is placed over the impact absorber 4. The link 23 between the support 3 and the steering rod 2 is mechanical and is telescopic (not shown) such they are mutually linked according to a single degree of freedom. Therefore, when an impact occurs and the support 3 moves upwards, its upper end moves axially inside a steering rod 2, which is integral with the steering handlebar Ha. This is the only degree of freedom allowed, as they cannot rotate relative to each other to ensure steering ability.

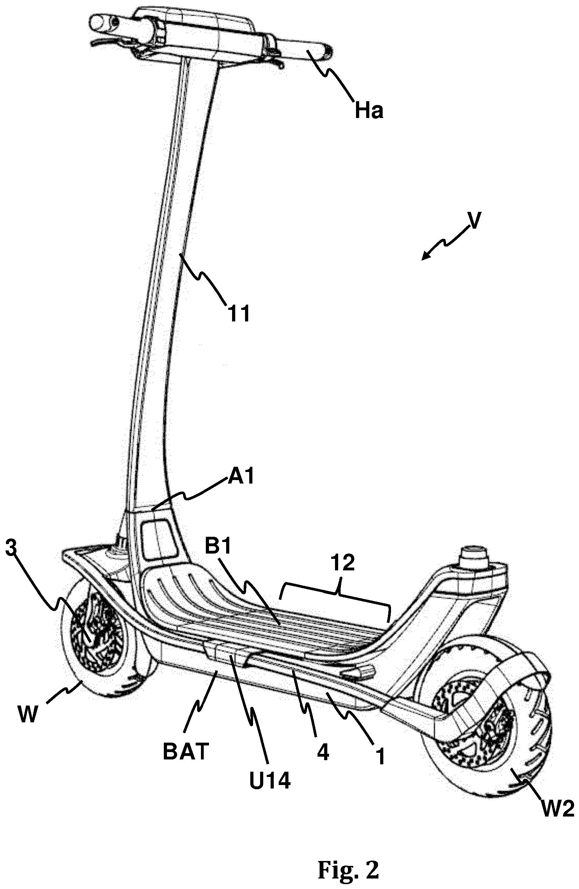

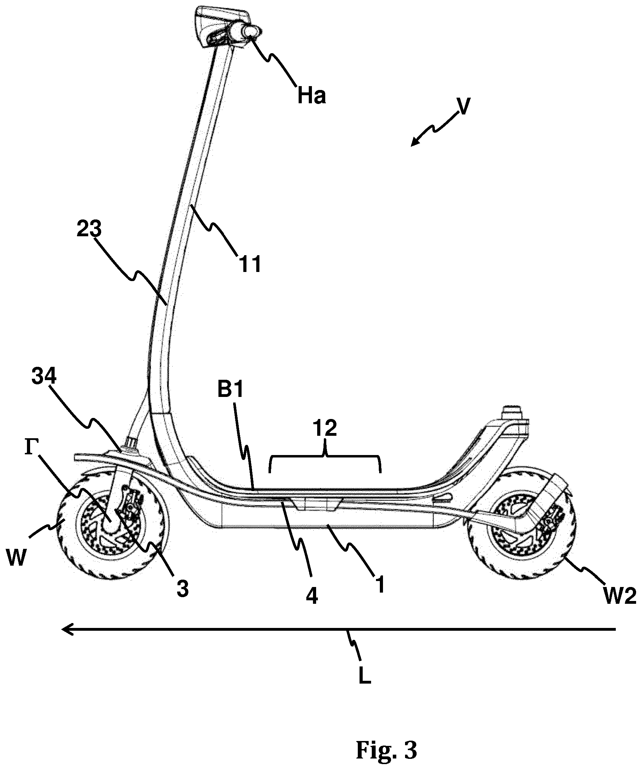

In the embodiments shown in figures 1 to 3, the impact absorber 4 extends backwards by means of a rear end 43, a rear wheel W2 bearing on the rear end 43 of the elongated element 4, such that the impact absorber 4 also constitutes the suspension of the rear wheel W2. Preferably, the impact absorber has a shape comprising two inflexion points.

As already disclosed, the platform 1 has an upper prolongation 11 that extends forwards and upwards, such that it encloses an upper portion 21 of the steering rod 2, the link 23 between the support 3 and the steering rod 2 being preferably inside the upper prolongation 11.

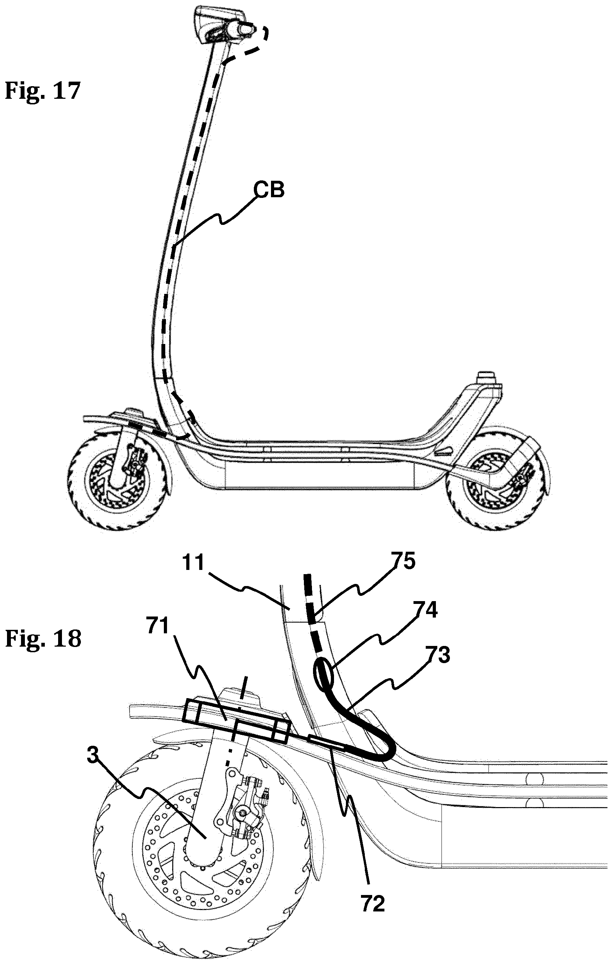

This upper prolongation 11 is a novelty in itself when applied to a scooter V. The invention allows the steering bar 2 to be smaller in size, which in turn allows said upper prolongation 11, which is integral with platform 1, also to be slender. Thus, it allows hiding steering elements, such as in this case the steering bar 2, or in other cases it could hide steering control cables CB (as those shown in Figures 17 to 19), Bowden type, electrical cables, or any auxiliary technical element. Therefore, it is not necessary that the purely technical elements have perfect finishes, since the upper prolongation 11 already performs the aesthetic function.

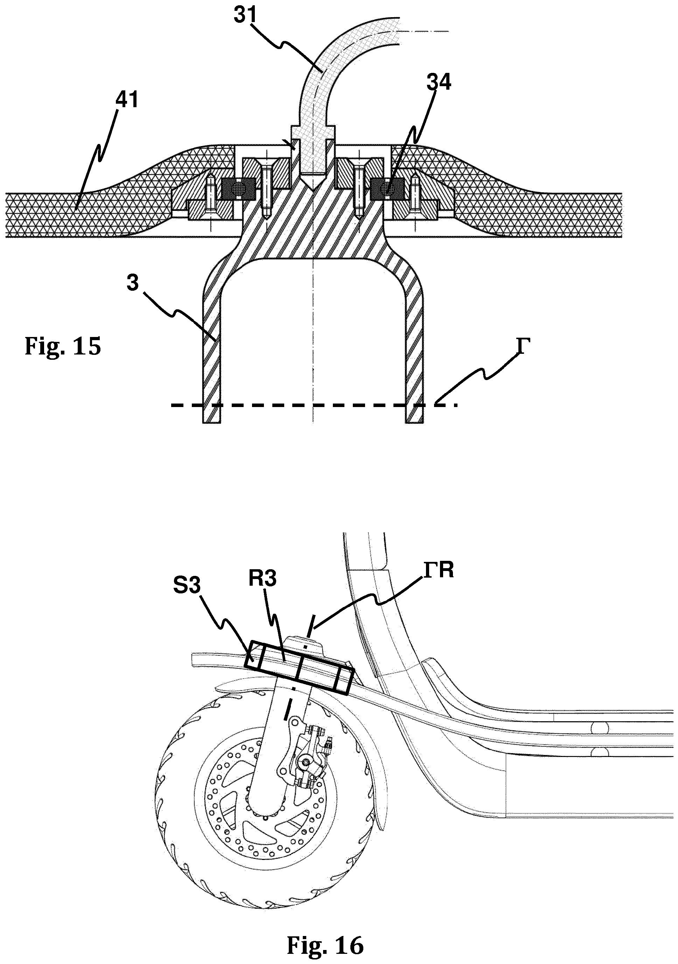

To allow folding the scooter V, according to a preferred embodiment, an articulation portion 31 of the support 3 located above the impact absorber 4 and below the link 23 between the support 3 and the steering rod 2 is articulated or is elastic such a that it allows bending the articulation portion 31 in the plane defined by the steering rod and the longitudinal direction of the scooter V. This articulation portion 31 can comprise a cardan articulation and/or elastic portion 31 such that is bendable. Figure 15 shows that a portion of the front wheel support 3 is bendable.

For reasons of clarity in the explanations, it has been considered that the part that can be folded 31 is part of the support 3. That has been done so, because between said part 31 and the wheel support there are no axial movements, as there are between the upper end of 31 and the steering bar 2, because to allow the absorption of the displacements caused by the impacts or by the bending of the steering column, it is necessary that there be, as it has been connected, a telescopic link.

As shown in the section of figure 15, the scooter comprises a rotating bearing 34 for transmitting the forces between the support 3 of the front wheel W and the impact absorber 4.

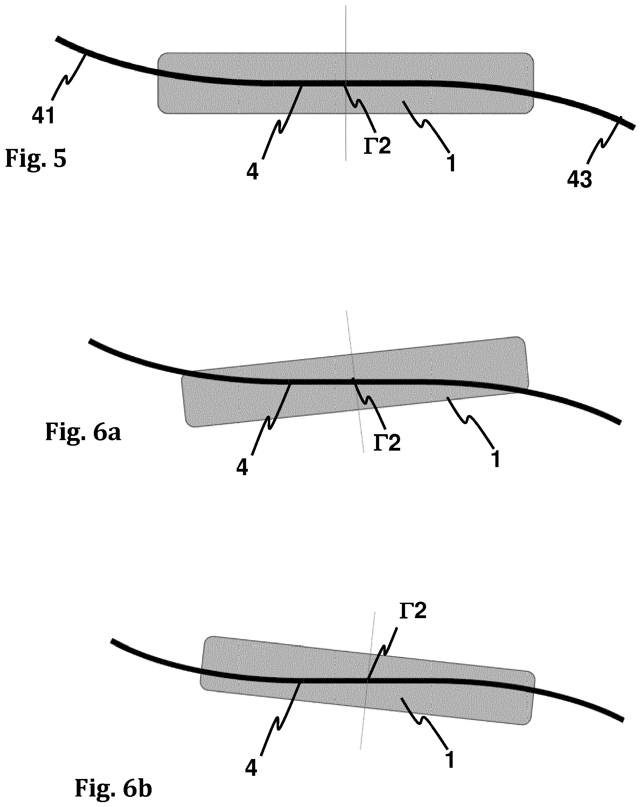

Figures 5, 6a and 6b illustrate one of the advantageous effects of the invention.

As mentioned, the invention allows the damping function to be carried towards the platform, including the union between impact absorber 4 and platform 1. This allows to create kinematics such as the one illustrated in the mentioned figures. In Figure 5 a Γ2 articulation axis is highlighted. This axis Γ2 allows the relative movements illustrated in Figures 6a and 6b.

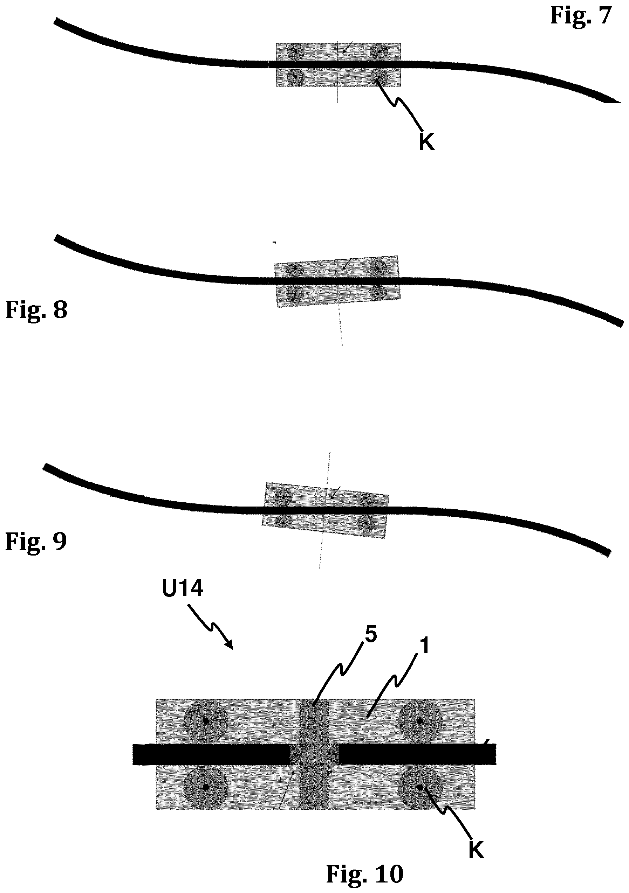

This axis illustrates roughly a kinematics sought between components 1 and 4. It can be implemented in many ways. For example with a physical axis that matches the axis Γ2. Another way of implementing it, which allows the joint area to be distributed in space, to distribute forces (and to reduce the requirements in terms of materials) is as illustrated in Figures 7 to 10, using elastic elements K.

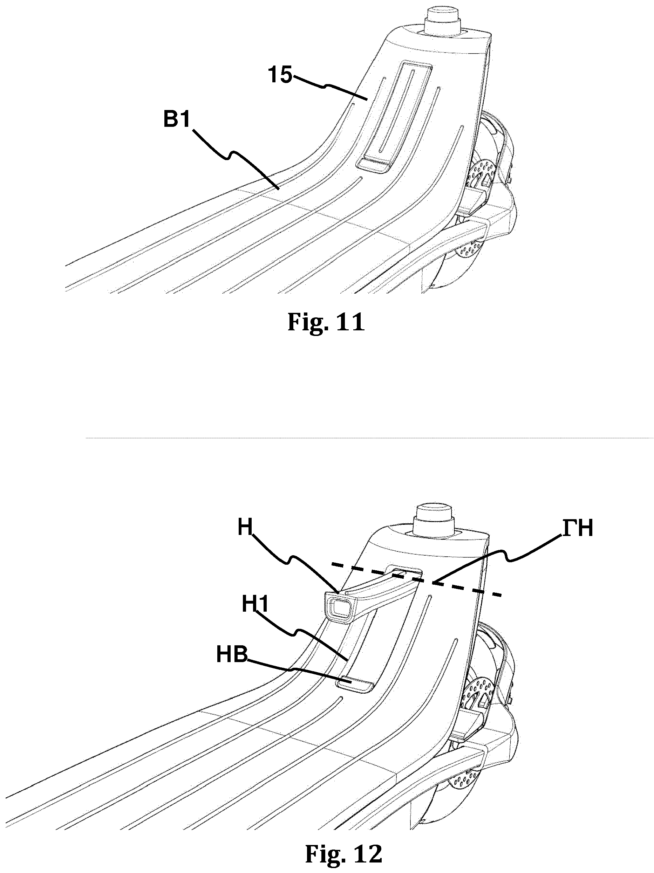

In figures 11 and 12 an embodiment is shown in which the scooter preferably comprises, in an ascending slope section, a retractable handle H.

This particular feature comprises by itself an invention that could be claimed independently. The rear handle H of the platform is articulated with the platform by means of the axis ΓH, transverse to the scooter. A housing H1 is provided to hide the handle H. Also, an actuator or HB button can be provided that allows, by push, to release the handle so that it goes out to its use position.

Therefore, it is possible to claim a scooter V comprising a user platform 1, provided with an upper part B1, a rear end of said upper part B1 being provided with a housing H1, a rotating handle H articulated with said upper part B1 by means of a ΓH axis, so that the handle H can be moved between a position of use in which it is outside the housing H1, and another hidden position in which its upper part is flush with the upper surface of the upper part B1 of the platform 1. Preferably, a push-type release button HB can be provided that allows the handle H to be released, which can be deployed outwardly driven by a spring (not shown).

Figure 16 shows an embodiment in which a steering rod 2 is dispensed with. In particular, in this embodiment, the steering components consist of an electric motor, in turn constituted by a stator S3 and a complementary rotor R3 that can rotate moved by stator S3. An advantage of the invention is that the impact absorber 4 has a shape and structure that allows to accommodate such a steering element. Then it will be provided that the handle has a user interface that allows it to remotely steer the wheel, which can rotate around the ΓR axis. In a particular embodiment, said user interface emulates a mechanical steering rod, for example it comprises movement sensors (e.g. accelerometers or gyroscopes) in a handle or a rod which can rotate but which does not mechanically transfer a steering movement to the front wheel W, instead the rotation is transferred electronically.

In another embodiment, illustrated by Figures 17 to 19, the steering means comprise Bowden CB cables. These are implemented, in a known manner by means of support bushes 72, a sheath 73 inside which is the traction cable. As can be seen, through an opening 74, a large part of the cable 75 can be hidden inside the upper extension 11.

The system is completed with an actuating crown 71, which acts as a lever between the ends of the two cables. It is a system known in the handling of boats, but which constitutes a novelty according to the present invention. And it stands out that what makes it especially easy to integrate a steering solution based on a rotary cable-operated support is the structure based on an impact absorber 4 that can only be moved in the mid-plane MP, as claimed.

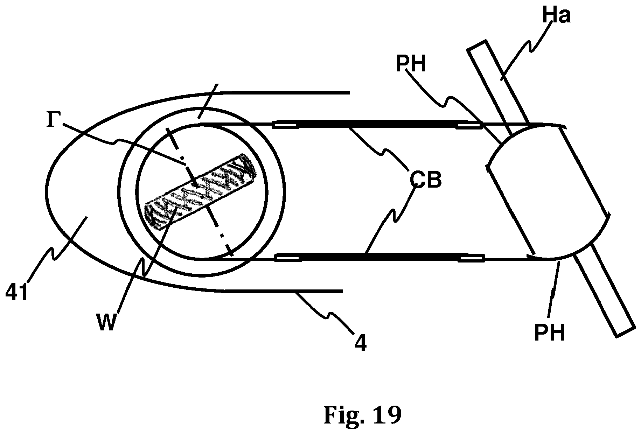

The operation of a cable-based steering system is shown in simplified form in Figure 19. The handlebar Ha is shown on the right, which has two associated pulley portions PH, where the ends of the CB drive cables are anchored. At the end of the wheel W there is a crown, to which the other ends of the cables are attached. If the effect is to be that of a classic steering bar, the radii of PH and the crown will be identical. Obviously, it could be conceived that there was a multiplier or multiplier effect by varying the ratio of radii.

In this text, the term "comprises" and its derivations (such as "comprising", etc.) should not be understood in an excluding sense, that is, these terms should not be interpreted as excluding the possibility that what is described and defined may include further elements, steps, etc. The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Scooter (V) comprising a user support platform (1), a front wheel (W), a front fork (3) of the front wheel (W), and suspension means of the front wheel (W), the suspension means (S) comprising a single leaf spring (4) linked to the platform (1), the single leaf spring (4) comprising a front end (41), the single leaf spring (4) being movable or deformable only in planes parallel to a median plane of the platform (1) such that the front fork (3) of the front wheel (W) is rotatable with respect to the single leaf spring (4) to allow steering of the scooter, **characterized in that** the front fork (3) of the front wheel (W) leans on the front end (41) of the single leaf spring (4), such that the suspension means transmit the impacts to the platform, wherein the front end (41) of the single leaf spring (4) is above the wheel (W) such that the suspension means transmit the impacts to the platform through a region located just above the front wheel (W), the front fork (3) of the front wheel (W) bearing on a lower surface (42) of the single leaf spring (4).

2. Scooter (V) according to claim 1, which comprises steering means (2) and a link (23) between the front fork (3) and the steering means (2), the steering means (2) comprising preferably a steering rod (2) that can rotate with respect to the platform (1).

3. Scooter (V) according to any of the preceding claims, wherein the single leaf spring (4) extends backwards by means of a rear end (43), a rear wheel (W2) bearing on the rear end (43) of the elongated element, such that the single leaf spring (4) also constitutes the suspension of the rear wheel (W2).

4. Scooter (V) according to claim 2, wherein the steering means (2) comprise a steering rod (2) that can rotate with respect to the platform (1), the front fork (3) passes through the single leaf spring (4), such that the link (23) between the front fork (3) and the steering rod (2) is placed over the single leaf spring (4).

5. Scooter according to claim 2 and any claim dependent thereof, wherein the link (23) between the front fork (3) and the steering rod (2) is mechanical and is telescopic such they are mutually linked according to a single degree of freedom.

6. Scooter (V) according to claim 2 or claim 5, wherein the platform (1) has an upper prolongation (11) that extends forwards and upwards, such that it encloses an upper portion (21) of the steering rod (2), the link (23) between the front fork (3) and the steering rod (2) being preferably inside the upper prolongation (11).

7. Scooter (V) according to claim 2, claim 5 or claim 6, wherein an articulation portion (31) of the front fork (3) located above the single leaf spring (4) and below the link (23) between the front fork (3) and the steering rod (2) is articulated or is elastic such that it allows bending the articulation portion (31) in the plane defined by the steering rod and the longitudinal direction of the scooter (V).

8. Scooter (V) according to claim 7, wherein the articulation portion (31) comprises a cardan articulation and/or elastic portion (31) such that is bendable.

9. Scooter according to any of the preceding claims, wherein the single leaf spring (4) is attached to the platform (1) in a central area (12) of the platform (1), the central area being preferably located in the second third of the platform (1).

10. Scooter (V) according to any of the preceding claims, which comprises a rotating bearing (34) for transmitting the forces between the front fork (3) of the front wheel (W) and the impact absorber (4).

11. Scooter (V) according to any of the preceding claims, wherein the attachment (U14) between the platform (1) and the elongated single leaf spring (4) comprises elastic parts (K), and is preferably formed by a transversal axis (Γ2) that allows the single leaf spring (4) to rotate with respect to the platform, and at least four pairs of elastic parts (K), preferably cylindrical or triangular, that elastically limit the rotation angle of the single leaf spring (4) with respect to the platform (1) around said axis (Γ2).

12. Scooter (V) according to claim 1, which comprises steering means and a link between the front fork (3) and the steering means, the steering means comprising a pulley or crown forming part of the front fork (3), the pulley or crown being linked to the handlebar (Ha) with two cables (CB, 71, 72, 73, 74, 75), the handlebar (Ha) comprising a driving pulley for pulling the cables (CB, 71, 72, 73, 74, 75).

13. Scooter (V) according to any of the preceding claims, which comprises a retractable handle (H) in the rear portion (15) of the platform (1).

## Patentansprüche

1. Roller (V) umfassend
eine Benutzertrageplattform (1), ein Vorderrad (W), eine Vordergabel (3) des Vorderrads (W) und Aufhängungsmittel des Vorderrads (W), wobei die Aufhängungsmittel (S) eine einzelne Blattfeder (4) umfassen, die mit der Plattform (1) verbunden ist, wobei die einzelne Blattfeder (4) ein vorderes Ende (41) umfasst, wobei die einzelne Blattfeder (4) nur in Ebenen parallel zu einer Mittelebene der Plattform (1) beweglich oder verformbar ist, so dass die Vordergabel (3) des Vorderrades (W) in Bezug auf die einzelne Blattfeder (4) drehbar ist, um das Lenken des Rollers zu ermöglichen,
**dadurch gekennzeichnet, dass**
die Vordergabel (3) des Vorderrads (W) sich auf das vordere Ende (41) der einzelnen Blattfeder (4) stützt, so dass das Aufhängungsmittel die Stöße auf die Plattform überträgt, wobei das vordere Ende (41) der einzelnen Blattfeder (4) sich über dem Rad (W) befindet, so dass das Aufhängungsmittel die Stöße auf die Plattform über einen Bereich überträgt, der sich direkt über dem Vorderrad (W) befindet, wobei die Vordergabel (3) des Vorderrads (W) auf einer unteren Fläche (42) der einzelnen Blattfeder (4) aufliegt.

2. Roller (V) nach Anspruch 1, umfassend
ein Lenkmittel (2) und eine Verbindung (23) zwischen der Vordergabel (3) und dem Lenkmittel (2), wobei das Lenkmittel (2) vorzugsweise eine Lenkstange (2) umfasst, die sich in Bezug auf die Plattform (1) drehen kann.

3. Roller (V) nach einem der vorangehenden Ansprüche, wobei
die einzelne Blattfeder (4) sich über ein hinteres Ende (43) nach hinten erstreckt, wobei ein Hinterrad (W2) auf dem hinteren Ende (43) des länglichen Elements aufliegt, so dass die einzelne Blattfeder (4) auch die Aufhängung des Hinterrades (W2) bildet.

4. Roller (V) nach Anspruch 2, wobei
das Lenkmittel (2) eine Lenkstange (2) umfasst, die sich in Bezug auf die Plattform (1) drehen kann, die Vordergabel (3) durch die einzelne Blattfeder (4) hindurchverläuft, so dass die Verbindung (23) zwischen der Vordergabel (3) und der Lenkstange (2) über der einzelnen Blattfeder (4) angeordnet ist.

5. Roller nach Anspruch 2 und jedem davon abhängigen Anspruch, wobei
die Verbindung (23) zwischen der Vorderradgabel (3) und der Lenkstange (2) mechanisch und teleskopisch ist, so dass sie über einen einzigen Freiheitsgrad miteinander verbunden sind.

6. Roller (V) nach Anspruch 2 oder Anspruch 5, wobei
die Plattform (1) eine obere Verlängerung (11) aufweist, die sich nach vorne und nach oben erstreckt, so dass sie einen oberen Abschnitt (21) der Lenkstange (2) umschließt, wobei die Verbindung (23) zwischen der Vordergabel (3) und der Lenkstange (2) vorzugsweise innerhalb der oberen Verlängerung (11) liegt.

7. Roller (V) nach Anspruch 2, Anspruch 5 oder Anspruch 6, wobei
ein Gelenkabschnitt (31) der Vorderradgabel (3), der sich oberhalb der einzelnen Blattfeder (4) und unterhalb der Verbindung (23) zwischen der Vorderradgabel (3) und der Lenkstange (2) befindet, gelenkig oder elastisch ist, so dass er die Biegung des Gelenkabschnitts (31) in der durch die Lenkstange und die Längsrichtung des Rollers (V) definierten Ebene ermöglicht.

8. Roller (V) nach Anspruch 7, wobei
der Gelenkabschnitt (31) ein kardanisches Gelenk und/oder einen elastischen Abschnitt (31) umfasst, das/der biegbar ist.

9. Roller nach einem der vorhergehenden Ansprüche, wobei
die einzelne Blattfeder (4) in einem mittleren Bereich (12) der Plattform (1) an der Plattform (1) befestigt ist, wobei sich der mittlere Bereich vorzugsweise im zweiten Drittel der Plattform (1) befindet.

10. Roller (V) nach einem der vorhergehenden Ansprüche, umfassend
ein Drehlager (34) zur Übertragung der Kräfte zwischen der Vordergabel (3) des Vorderrades (W) und dem Stoßdämpfer (4).

11. Roller (V) nach einem der vorhergehenden Ansprüche, wobei
die Befestigung (U14) zwischen der Plattform (1) und der länglichen einzelnen Blattfeder (4) elastische Elemente (K) umfasst und vorzugsweise aus einer Querachse (Γ2), die eine Drehung der einzelnen Blattfeder (4) in Bezug auf die Plattform ermöglicht, und mindestens vier Paaren von elastischen Elementen (K), vorzugsweise zylindrisch oder dreieckig, die den Drehwinkel der einzelnen Blattfeder (4) in Bezug auf die Plattform (1) um die Achse (Γ2) elastisch begrenzen, gebildet ist.

12. Roller (V) nach Anspruch 1, umfassend
ein Lenkmittel und eine Verbindung zwischen der Vordergabel (3) und dem Lenkmittel, wobei das Lenkmittel eine Umlenkrolle oder einen Kranz umfasst, die/der einen Teil der Vordergabel (3) bildet,
die Umlenkrolle oder der Kranz mit dem Lenker (Ha) über zwei Seile (CB, 71, 72, 73, 74, 75) verbunden ist, wobei der Lenker (Ha) eine Antriebsrolle zum Ziehen der Seile (CB, 71, 72, 73, 74, 75) aufweist.

13. Roller (V) nach einem der vorhergehenden Ansprüche, umfassend
einen einziehbaren Griff (H) im hinteren Abschnitt (15) der Plattform (1).

## Revendications

1. Scooter (V) comprenant une plateforme de support utilisateur (1), une roue avant (W), une fourche avant (3) de la roue avant (W), et des moyens de suspension de la roue avant (W), les moyens de suspension (S) comprenant un unique ressort à lames (4) relié à la plateforme (1), l'unique ressort à lames (4) comprenant une extrémité avant (41), l'unique ressort à lames (4) étant mobile ou déformable uniquement dans des plans parallèles à un plan médian de la plateforme (1) de sorte que la fourche avant (3) de la roue avant (W) peut tourner par rapport à l'unique ressort à lames (4) pour permettre la direction du scooter, **caractérisé en ce que** la fourche avant (3) de la roue avant (W) s'appuie sur l'extrémité avant (41) de l'unique ressort à lames (4), de sorte que les moyens de suspension transmettent les impacts à la plateforme, dans lequel l'extrémité avant (41) de l'unique ressort à lames (4) est au-dessus de la roue (W) de sorte que les moyens de suspension transmettent les impacts à la plateforme par le biais d'une région située juste au-dessus de la roue avant (W), la fourche avant (3) de la roue avant (W) s'appuyant sur une surface inférieure (42) de l'unique ressort à lames (4).

2. Scooter (V) selon la revendication 1, qui comprend des moyens de direction (2) et une liaison (23) entre la fourche avant (3) et les moyens de direction (2), les moyens de direction (2) comprenant de préférence une tige de direction (2) qui peut tourner par rapport à la plateforme (1).

3. Scooter (V) selon l'une quelconque des revendications précédentes, dans lequel l'unique ressort à lames (4) s'étend vers l'arrière au moyen d'une extrémité arrière (43), une roue arrière (W2) s'appuyant sur l'extrémité arrière (43) de l'élément allongé, de sorte que l'unique ressort à lames (4) constitue également la suspension de la roue arrière (W2).

4. Scooter (V) selon la revendication 2, dans lequel les moyens de direction (2) comprennent une tige de direction (2) qui peut tourner par rapport à la plateforme (1), la fourche avant (3) passe par l'unique ressort à lames (4), de sorte que la liaison (23) entre la fourche avant (3) et la tige de direction (2) est placée sur l'unique ressort à lames (4).

5. Scooter selon la revendication 2 et l'une quelconque de ses revendications dépendantes, dans lequel la liaison (23) entre la fourche avant (3) et la tige de direction (2) est mécanique et est télescopique de sorte qu'elles sont mutuellement reliées selon un degré de liberté unique.

6. Scooter (V) selon la revendication 2 ou la revendication 5, dans lequel la plateforme (1) a un prolongement supérieur (11) qui s'étend vers l'avant et vers le haut, de sorte qu'elle enferme une partie supérieure (21) de la tige de direction (2), la liaison (23) entre la fourche avant (3) et la tige de direction (2) étant de préférence à l'intérieur du prolongement supérieur (11).

7. Scooter (V) selon la revendication 2, la revendication 5 ou la revendication 6, dans lequel une partie d'articulation (31) de la fourche avant (3) située au-dessus de l'unique ressort à lames (4) et au-dessous de la liaison (23) entre la fourche avant (3) et la tige de direction (2) est articulée ou est élastique de sorte qu'elle permet de plier la partie d'articulation (31) dans le plan défini par la tige de direction et la direction longitudinale du scooter (V).

8. Scooter (V) selon la revendication 7, dans lequel la partie d'articulation (31) comprend une articulation à cardan et/ou une partie élastique (31) de sorte qu'elle est pliable.

9. Scooter selon l'une quelconque des revendications précédentes, dans lequel l'unique ressort à lames (4) est fixé à la plateforme (1) dans une zone centrale (12) de la plateforme (1), la zone centrale étant de préférence située dans le second tiers de la plateforme (1).

10. Scooter (V) selon l'une quelconque des revendications précédentes, qui comprend un palier rotatif (34) pour transmettre les forces entre la fourche avant (3) de la roue avant (W) et l'amortisseur (4).

11. Scooter (V) selon l'une quelconque des revendications précédentes, dans lequel la fixation (U14) entre la plateforme (1) et l'unique ressort à lames (4) allongé comprend des parties élastiques (K), et est de préférence formée par un axe transversal (Γ2) qui permet à l'unique ressort à lames (4) de tourner par rapport à la plateforme, et au moins quatre paires de parties élastiques (K), de préférence cylindriques ou triangulaires, qui limitent, par voie élastique, l'angle de rotation de l'unique ressort à lames (4) par rapport à la plateforme (1) autour dudit axe (Γ2).

12. Scooter (V) selon la revendication 1, qui comprend des moyens de direction et une liaison entre la fourche avant (3) et les moyens de direction, les moyens de direction comprenant une poulie ou couronne faisant partie de la fourche avant (3), la poulie ou couronne étant reliée au guidon (Ha) avec deux câbles (CB, 71, 72, 73, 74, 75), le guidon (Ha) comprenant une poulie d'entraînement pour tirer les câbles (CB, 71, 72, 73, 74, 75).

13. Scooter (V) selon l'une quelconque des revendications précédentes, qui comprend une poignée rétractable (H) dans la partie arrière (15) de la plateforme (1).
